Europäisches Patentamt

(19) European Patent Office

Office européen des brevets

(11) Publication number: **0 110 006**

**B1**

(12) **EUROPEAN PATENT SPECIFICATION**

(45) Date of publication of patent specification: **01.10.86**     (51) Int. Cl.⁴: **G 11 B 5/54, G 11 B 21/12**

(21) Application number: **83106655.0**

(22) Date of filing: **07.07.83**

(54) Apparatus and method for releasing the magnetic head in a magnetic disk file.

(30) Priority: **26.11.82 US 444561**

(43) Date of publication of application:
**13.06.84 Bulletin 84/24**

(45) Publication of the grant of the patent:
**01.10.86 Bulletin 86/40**

(84) Designated Contracting States:
**DE FR GB**

(56) References cited:
**DE-A-2 206 545**

**Patent Abstracts of Japan vol. 7, no. 70, 23 March 1983 & JP-A-58-1858**
**Soviet Inventions Illustrated week D 46, section S 01, 23 December 1981 & SU-799022**

(73) Proprietor: **International Business Machines Corporation**
**Old Orchard Road**
**Armonk, N.Y. 10504 (US)**

(72) Inventor: **Cameron, Tucson Jay**
**340 Blossom Hill Road**
**San Jose California 95123 (US)**

(74) Representative: **Atchley, Martin John Waldegrave**
**IBM United Kingdom Limited Intellectual Property Department Hursley Park**
**Winchester Hampshire SO21 2JN (GB)**

Courier Press, Leamington Spa, England.

# Description

This invention relates to magnetic disk files and relates more particularly to apparatus and method for overcoming forces tending to cause the magnetic head to adhere to the disk surface when the disk is at rest.

. In current magnetic recording disk files of the type having one or more rotating magnetic disks and one or more magnetic heads moving relative to each disk for detecting and recording data on the magnetic disk, there have been problems encountered with the magnetic head tending to adhere to the surface of the disk while the disk is at rest. This adhering or stiction problem is aggravated by the presence on the disk surface of lubricant material which, studies have shown tends to puddle up between the disk surface and the head when the disk is not in motion and the head rests on the disk surface. This stiction problem is a relatively new one in magnetic disk files. In early magnetic disk files, as exemplified by the IBM 2311, 2314 and 3330 disk drives, the magnetic heads were never in contact with the magnetic disk surface (except in the event of an inadvertent head "crash"). Instead, the heads were removed from the disk area prior to powering down (switching off power from) the disk drive and, upon powering up (switching on power), were not repositioned over the disk area until the disks were rotating at a speed sufficient to generate an air-bearing for supporting the heads in a "flying" mode above the rotating disk surface. Hence, disk files of this type had no problems of stiction between the heads and disks.

With the advent of the IBM 3340 disk drive in 1973, the "start-stop in contact" mode of the disk file operation was introduced with a lubricant applied to the disk surface. In this disk file and subsequent files the heads came into contact with the recording disk surface (usually in a non-data portion thereof) when the file was powered down, and were in contact with the surface when the file was powered up. It is in this latter situation that possible problems with stiction arise.

In the disk files described above, each head is movable radially of the associated disk so as to be positioned over a selected one of a group of concentric recording tracks on the disk. The head is carried on a suspension assembly connected ultimately to an actuator. The head and its suspension have relatively good rigidity radially of the disk, but they are somewhat fragile when subjected to a force in a direction tangentially of the disk. Such a tangential force is just what is applied to the suspension when stiction is encountered. As the disk begins rotation, the lubricant under the head face tends to hold the head, and as the disk picks up rotational speed, substantial forces can become applied to the head and the suspension, resulting in damage to or destruction of the suspension, and possible damage to the disk surface.

The object of the present invention is to provide apparatus and method for avoiding the above described problem of stiction occurring in magnetic disk files.

According to one aspect of the invention apparatus for releasing the magnetic head of a magnetic disk file comprises means for imparting oscillatory motion to the head relative to the disk when the disk is stationary.

According to another aspect of the invention a method of releasing the magnetic head of a magnetic disk file comprises imparting oscillatory motion to the head relative to the disk when the disk is stationary.

By imparting oscillatory motion to the head, the tendency of the head to adhere to the surface of the disk is largely overcome.

In order that the invention may be more readily understood reference will now be made to the accompanying drawings in describing one embodiment of the invention.

In the drawings:—

Figure 1 is a timing diagram showing the relationship between the oscillatory motion employed in this invention and the application of drive power to the disks; and

Figure 2 is a graph showing the shape of the current waveform supplied to the actuator to produce the oscillatory motion.

The present invention may be employed in a magnetic disk file of a suitable type such as that shown in United Kingdom Patent Specification 2,007,921, which Specification is incorporated by reference herein. Such a disk file includes a head/disk assembly (HDA) which contains a plurality of magnetic recording discs mounted on a shaft for common rotation by a drive motor which is external to the HDA. The HDA also includes a plurality of sliders carrying magnetic heads for magnetically cooperating with different concentric recording tracks on the disk surfaces. As described in the above Patent Specification, the heads in the HDA are moved to different tracks by two actuators having coils which are movable in separate gaps of a common voice coil motor (VCM) structure. It is this VCM structure and the coils therein which are used in the present invention to provide small amplitude oscillatory motion or micromotion of the heads prior to the application of power to drive the disks and while the heads are in contact with the surface of the disks.

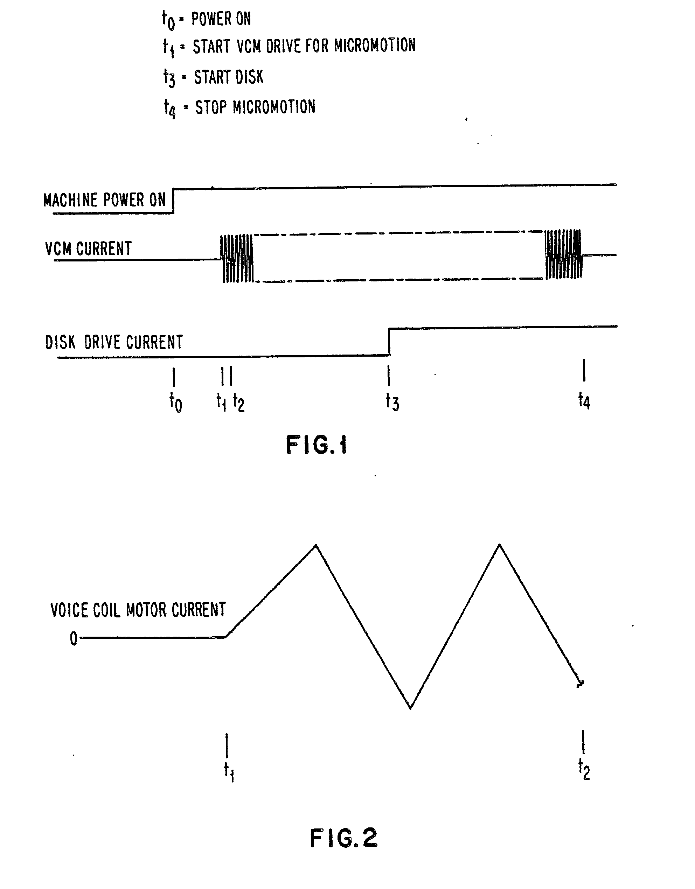

Referring to Figure 1, time $t_0$ represents the time at which power is supplied to the disk file but not to the disk drive motor. A short time thereafter, at time $t_1$, the small amplitude oscillatory motion or micromotion of the present invention is begun by supplying an oscillating current to the coils of the VCM. This produces a small amount of motion of the heads radially of the disks and serves to initiate releasing them from the stiction forces which may cause them to adhere to the lubricant on the disk surfaces. At some time $t_3$ after $t_1$, power is applied to the disk drive motor to initiate rotation of the disks, and at time $t_4$ the oscillating current supplied to the VCM coils is turned off to terminate the oscillatory motion.

Figure 2 is a graph of the shape of the current waveform employed in a disk file of the type shown in the above-mentioned Patent Specification to produce oscillatory motion of the heads in the disk file. The current waveform is shown for the interval between $t_1$ and $t_2$ in Fig. 1 and is representative of the current waveform for the entire interval $t_1$—$t_4$. It has been found that when such oscillatory motion is employed every time the disk file is powered on, it is very effective in reducing or eliminating stiction problems with their attendant risk of damage to the heads or disks, or both.

## Claims

1. Apparatus for releasing the magnetic head of a magnetic disk file comprising means for imparting oscillatory motion to the head relative to the disk when the disk is stationary.

2. Apparatus as claimed in claim 1 in which said oscillatory motion is radially of said disk.

3. A method of releasing the magnetic head of a magnetic disk file comprising imparting oscillatory motion to the head relative to the disk when the disk is stationary.

4. A method as claimed in claim 3 in which said oscillatory motion is radially of said disk.

## Patentansprüche

1. Vorrichtung zum Lösen des Magnetkopfes einer Magnetplattendatei, welche Mittel umfaßt, mit welchen dem Kopf in Bezug auf die Platte eine hin- und hergehende Bewegung mitgeteilt werden kann, wenn die Platte feststehend ist.

2. Vorrichtung nach Anspruch 1, bei welcher die hin- und hergehende Bewegung radial zur Platte ist.

3. Verfahren zum Lösen des Magnetkopfes einer Magnetplattendatei, bei welchem dem Kopf in Bezug auf die Platte eine hin- und hergehende Bewegung mitgeteilt wird, wenn die Platte feststehend ist.

4. Verfahren nach Anspruch 3, bei welchem die hin- und hergehende Bewegung radial zur Platte ist.

## Revendications

1. Appareil pour libérer la tête magnétique d'une unité de disques magnétiques, comprenant des moyens pour entraîner selon un déplacement oscillatoire la tête par rapport au disque, lorsque ce dernier est fixe.

2. Appareil selon la revendication 1, dans lequel ledit déplacement oscillatoire s'effectue radialement par rapport audit disque.

3. Procédé pour libérer la tête magnétique d'une unité de disques magnétiques, consistant à entraîner selon un déplacement oscillatoire la tête par rapport au disque, lorsque ce dernier est fixe.

4. Procédé selon la revendication 3, selon lequel ledit déplacement oscillatoire s'effectue radialement par rapport auxdits disques.

$t_0$ = POWER ON

$t_1$ = START VCM DRIVE FOR MICROMOTION

$t_3$ = START DISK

$t_4$ = STOP MICROMOTION

MACHINE POWER ON

VCM CURRENT

DISK DRIVE CURRENT

$t_0$     $t_1$ $t_2$        $t_3$        $t_4$

**FIG.1**

VOICE COIL MOTOR CURRENT

0

$t_1$           $t_2$

**FIG.2**